# EUROPEAN PATENT APPLICATION

(11) **EP 2 784 566 A1**
(43) Date of publication of application: **01.10.2014**
(21) Application number: 13160958.8
(22) Date of filing: 25.03.2013
(51) Int. Cl.: G02B 26/08

(54) **Steerable MOEMS device comprising a micromirror**

(71) Applicant: CSEM Centre Suisse d'Electronique et de Microtechnique SA - Recherche et Développement, 2002 Neuchâtel (CH)
(72) Inventor: Lani, Sébastien, 1791 Courtaman (CH); Bayat, Dara, 2000 Neuchâtel (CH)
(74) Representative: GLN SA

(57) **Abstract**

The present invention relates to a MOEMS (micro-opto-electro-mechanical system) device comprising:
- an assembly comprising a reflecting silicon membrane (10), of which curvature is determined by the pressure of a gas contained in a cavity (12) under said membrane, said cavity being formed by two bonded silicon substrates of which at least one is micro structured,
- a flexible suspension (22) to which said assembly is attached,
- a frame (40) on which the flexible suspension is fixed, and
- an actuation mechanism (54) connected to said assembly and able to constrain the flexible suspension (22), allowing the steering and orientation of said assembly in space.

## Description

### Technical Field

The invention relates to the field of MOEMS (i.e. micro-opto-electro-mechanical system) more particularly to addressable optical micro mirrors.

### State of the art

Silicon is a widely used material in the field of MEMS (Micro-electro-mechanical systems) and MOEMS (Micro-opto-electro-mechanical systems). Silicon wafers can have highly polished optical surfaces, have excellent mechanical properties and allow batch fabrication of complex and inexpensive micromechanical structures easily combined with microelectronic circuits. These mechanical structures are the building blocks of a huge variety of sensors, actuators or micro mechanical components.

Silicon micro technologies have also been applied specifically to the field of optical devices and systems during the last 25 years and has led to the realization of a wide variety of micro optical refracting and reflecting devices. Some of them are used as passive components in optical systems, such as micro lenses or micro mirrors. Others are active components and are addressable using electrostatic, piezoelectric, thermal or electromagnetic actuation, so that the optical properties of an incident light beam can be modified, such as the change of its direction, its polarization state, its divergence or the modification of the shape of the refracted or reflected beam.

G. Vdovin et al. in Applied Optics, Vol.34, nr.16, p.2968 (1995) describes for example a flexible micro mirror machined by means of silicon structuring technologies and uses electrostatic forces to deform the mirror. The system is constructed by realizing a cavity with on one side a very thin silicon nitride mirror and on the opposed side a flat substrate. The flat substrate opposed to the mirror has an array of integrated electrodes and by applying a signal controlled voltage distribution between the electrodes and the mirror, its shape can be modified slightly. By varying the electrostatic forces induced by the electrode array, the shape of the mirror can be tuned and the device can be used in optical systems to adjust the focus or in a system for adaptive optics to correct the wavefront of the optical beam.

In other optical systems adjustable micro optical lenses are used. EP 2239600A1 discloses an adjustable optical micro lens comprising a transparent and elastic polymer membrane, a support for the membrane and a fluid between the membrane and the support. The actuator comprises a first electrode interconnected to the membrane and a second electrode arranged above the membrane. By applying an addressable voltage between the electrodes, the shape of the front surface of the refractive lens can be deformed and can be changed between a convex and a concave external shape.

For a lot of applications in optics it would be desirable to provide with means that allows to have important deformations of the surface and also to avoid the use of electrodes and liquids in the cavities of the micro optical elements. In the case of electrostatic forces the change of curvature of micro mirrors is small and it would be desirable to generate greater forces and as such stronger curvatures. Also, it would be desirable to avoid electrical connections under the mirrors as this can lead to static charging of the surfaces or long term degradation of the electrostatic forces due to corrosion if the device is not hermetically sealed.

The use of polymer membranes represents other specific problems such as long term reliability. Indeed, polymer membranes such as PDMS are partially permeable for gases and become brittle under UV radiation. Polymer membranes are also quite sensitive to mechanical damage.

Another important observation is that nearly all lenses and mirrors have to be combined if one wants to achieve at the same time two optical functions, i.e. focusing and change of direction of the beam. Hence, there is an important application field requiring micro optical devices that at the same time allow to change the divergence and the direction of a light beam.

### Summary of the invention

The invention embraces a micro-opto-electro-mechanical system (MOEMS) device carrying an electrical signal-controllable orientable curved mirror for the simultaneous change of direction and divergence of a light beam.

The invented MOEMS device comprises a curved silicon micro mirror attached to a mechanical suspension fixed to a supporting frame structure that incorporates an actuator mechanism which allows to steer and orient the mirror in space. According to the invention, the curvature of the mirror is induced by a gas pressure applied on the mirror.

In an embodiment of the invention, a sealed cavity under the mirror contains the gas under a fixed pressure.

In a further embodiment of the invention, the mechanical suspension structure of the mirror incorporates internal micro channels allowing to conduct gas and modify the shape of the mirror by varying the gas pressure in a cavity under the mirror.

In a further embodiment of the invention, the mechanical suspension structure incorporates internal or external microstructures allowing to cool the mirror by heat exchange between the mirror and its surrounding environment

The resulting MOEMS devices are advantageous for a wide variety of applications, such as, but not limited to, optical beam steering in space, optical switching, variable optical attenuators and adaptive optics.

### Brief description of the drawings

The above described objects and advantages of the present invention will become more readily apparent to those ordinarily skilled in the art after reviewing the following detailed descriptions and accompanying drawings, in which:
- Fig.1a is a side cross sectional view of the MOEMS device with its mirror assembly at rest;
- Fig.1b is another side cross sectional view of the MOEMS device with its mirror assembly at rest;
- Fig.1c shows a top view of the MOEMS device with different types and configurations of flexible suspension beams attached to the mirror assembly;
- Fig.1d shows a top view of the MOEMS device with a spiral shaped suspension beam;
- Fig.2 is a view of the MOEMS device in an actuated position;
- Figures 3a, b, c illustrates a realization of a MOEMS device with a mirror whose shape can be changed by varying the gas pressure in the mirror cavity;
- Fig.4a illustrates a mirror assembly comprising a central wall;
- Fig.4b is another realization of a mirror assembly comprising a central wall;
- Fig.5 is the illustration of a curved mirror whose diameter is larger than the width of the supporting frame of the MOEMS device; and
- Fig.6 illustrates a MOEMS device assembled on a linear actuator.

### Detailed description of preferred embodiments

The following detailed description illustrates the principles of the invention. It will thus be appreciated that those skilled in the art will be able to device various arrangements that, although not explicitly described or shown herein, embody the outlined principles of the invention and are included in its scope as defined in the claims. In the description, identical numbered components within different ones of Figures, refer to the same components or structural elements.

The invention relates to a MOEMS device comprising a mirror assembly, composed of two bonded silicon substrates, at least one of which is structured so as to form a cavity 12 in between said substrates. Moreover, one face of the cavity, parallel to the substrate plane, defines a membrane 10, the curvature of which is determined by the pressure of a gas contained in the cavity. The external surface of the membrane is treated so as to improve its reflection and to form a mirror. Said mirror assembly is, according to the invention, attached to a flexible structure 22 which is fixed to a supporting frame 40, allowing the suspension of said mirror assembly. Still according to the invention, the orientation of said mirror assembly can be changed by forces applied between said mirror assembly and an actuator 54 organized on a platform 50 that is fixed to the supporting frame 40.

Although the term MOEMS is well known in the domain of micro systems and to those skilled in the art, it will be reminded that MOEMS stands for a Micro-Opto-Electro-Mechanical-System, a field of MEMS (Micro Electro Mechanical Systems) comprising optical elements.

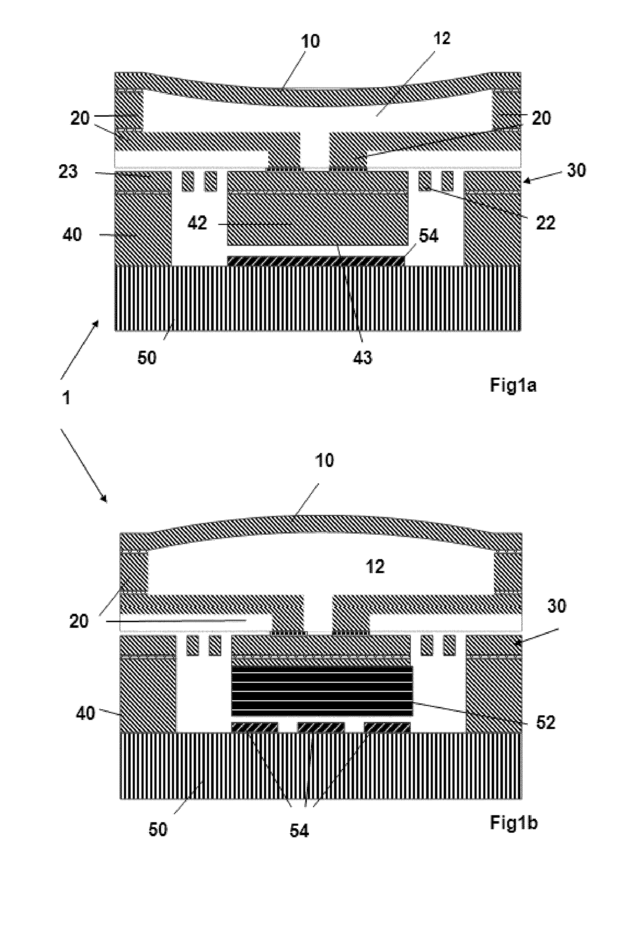

Shown in Fig.1a is a cross section illustrating the main components of an exemplary assembly of the MOEMS device which can steer and orient, by the use of appropriate electrical signals applied to the actuator 54, the silicon membrane 10, used as the mirror, whose surface is bent by the ratio between the pressure of the gas in the cavity of the mirror assembly and the pressure exerted on the external surface of the mirror. The exemplary MOEMS device is constructed by the assembly of four main components:
- said mirror assembly,
- a silicon structured substrate 30 comprising the flexible structure 22,
- the supporting frame 40 of the MOEMS device to which the flexible suspension structure is fixed,
- the actuator 54, assembled and organized on the platform 50 which is fixed firmly to said supporting frame 40.

According to the invention, the mirror 10, its flexible suspension structure 22 and the supporting frame 40 are realized by standard micro technology techniques known by those skilled in the art of micro system technologies.

In a first preferred embodiment of the MOEMS device, as illustrated in Fig.1a-1b, the shape of the curved mirror 10 is induced by the pressure of a gas maintained in the cavity 12 which is sealed. This cavity 12 iscompletely formed at the end of the assembly process of the mirror substrate and the structured supporting substrate. The suspension structure 22 to which the mirror assembly is attached, comprises flexible suspension beams which are fixed, at their extremities 23, to the supporting frame 40. The platform 50 is also attached to the supporting frame 40 of the MOEMS, and comprises actuation means 54 that allow, by induced forces on the mirror assembly, to steer the mirror assembly.

In order to realize said mirror assembly and said suspension structure, three silicon wafer substrates are structured and assembled.
- The first silicon wafer substrate is the membrane substrate and comprises the silicon membrane 10 of which one surface has the function of an optical reflector.
- The second silicon wafer substrate 20 is the support substrate of the membrane. In the second support substrate the cavity 12 is formed by advantageously chosen masking and etching techniques which are standard and well known in the field of MEMS technologies.
- The third silicon wafer substrate 30 is the suspension substrate and is structured so that flexible suspension structure 22 is formed by advantageously chosen conventional masking and etching techniques.

In order to prepare the bonding of the three substrates, the micro structuring process steps of the three substrates comprise also the deposition of materials, preferably metals, on the surface of the three said substrates.

Typical materials used in the technology process of the current device are, but not limited to: Si, SiO2, Al and SiO. After alignment, the three substrates are bonded together by conventional methods, so as to form, at the end of the bonding process, the sealed mirror assembly attached to the flexible suspension structure 22. By using an advantageously chosen assembly and bonding process of the membrane substrate with the support substrate in a controlled atmosphere under pressure, the sealed mirror assembly is formed and the cavity contains, at the end of the sealing process, the reacting gas under pressure, i.e. the same pressure as the pressure applied in the reaction chamber. The pressure of the gas in the sealed cavity 12 results in a force applied to the membrane 10.The pressure of the gas into said sealed cavity 12 bends the membrane so that its shape is curved at the end of the bonding and sealing process. Because the cavity 12 of the mirror assembly in this preferred embodiment is hermetically sealed, the mirror will keep its induced curved shape.

Depending on the desired shape of the membrane surface, the pressure of the gas used in the assembly process can be chosen higher or lower than the atmospheric pressure. If at the end of the bonding process the pressure inside the sealed cavity 12 is higher than the pressure external to the cavity, the mirror 10 will be bent outwards and present a convex surface to an incident light beam on that mirror, as illustrated in Fig.1b. On the contrary, if the pressure in said sealed cavity 12 is lower than the pressure outside said cavity, the mirror 10 will be bent towards its said supporting substrate and present a concave shape to an incident light beam, as illustrated in Fig.1a. The used gas can be any type of gas, preferably an inert gas.

In order to bend the mirror membrane by the action of a gas pressure in the cavity, the membrane 10 is chosen relatively thin and its thickness depends on the desired pressure, the dimensional parameters of the mirror membrane and on the preferred curvature of its surface. Typical thickness values of the membrane are between 5 µm and 200 µm, preferable between 10-100 µm. Advantageously the diameter of the membrane 10 is relatively small, typically between 1 mm and 15 mm, preferably 5 mm. The desired radius of curvature of the mirror depends on the specific application, and is preferably greater than 100 mm for concave surfaces and preferably greater than 15 mm for convex surfaces. The border of the mirror can have any shape, and has preferably a square shape, more preferably a circular shape. The shape of the surface of the membrane is preferable concave, preferable flat or preferably convex, depending on the specific application. Advantageously chosen layers are deposited on the external surface of the silicon membrane 10 in order to enhance its reflection properties. The deposited layer is preferably a dielectric, more preferably a metal, even more preferably a combination of a metal and a dielectric layer.

The skilled person will determine by routine tests the thickness and the corresponding pressure to be applied, in accordance with the shape to be obtained.

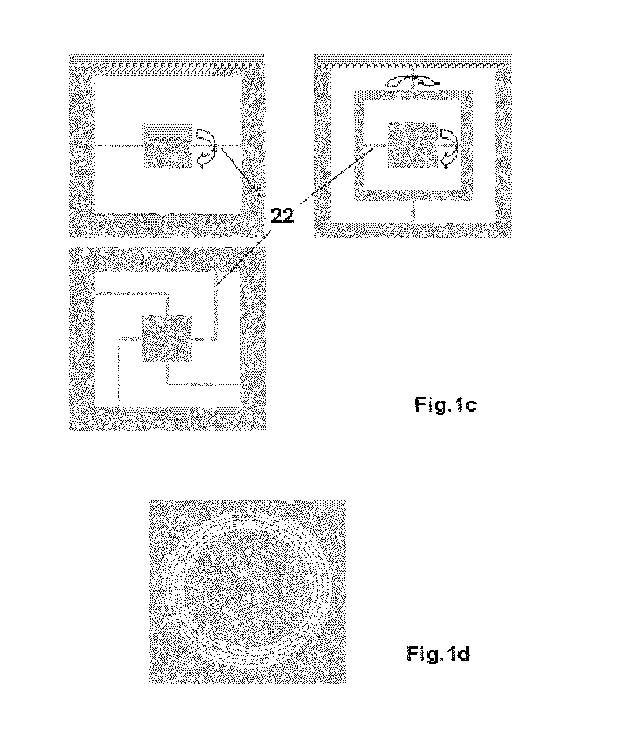

A second main component in the MOEMS device is the mechanical suspension structure 22 of the mirror assembly. This mechanical suspension structure 22 is realized by microstructuring the third silicon substrate 30. In a preferred realization, illustrated in Fig.1c, suspension beams are formed by structuring process of said third silicon substrate 30. In a preferred realization four suspension beams are formed in the third silicon substrate 30. The invention is however not limited to suspension configurations that comprise four flexible beams. In other embodiments of the MOEMS, different configurations may have different number of suspension beams with different shapes and geometries as shown in Fig.1c. The beams can have for example, organized in the plane of the support substrate, an S-shape, or a C-shape. The suspension structure may also be a spiral shaped suspension structure as shown in Fig.1d. The suspension beams have preferably rectangular cross sections with typically dimensions of 50-100 µm. Other cross section geometries of said suspension beams are of course possible and depend mainly on the desired torque response of the MOEMS, the desired stiffness of the suspension beams and the maximal steering angle of the mirror.

By the bonding of the structured substrate 30 that comprises the flexible suspension structure 22 to said mirror assembly, one obtains the mirror assembly that can be suspended by attaching said suspension structure 22 to the supporting frame 40. This supporting frame 40 is the third main component of the MOEMS device and guarantees its structural rigidity. The mirror assembly is attached to the supporting frame 40 by the extremities 23 of its suspension beams 22. The actuator system is also firmly attached to the supporting frame 40 of the MOEMS device by using a platform 50 on which the actuators 54 are organized.

The supporting frame 40 can be realized by different methods. In a preferred realization the supporting frame 40 is realized by the bonding and subsequent etching of a silicon substrate bonded to the suspension substrate 30. After the etching process of said silicon substrate, two structures are formed: a first part constitutes the supporting frame 40 and the other remaining part 42 constitutes a base 42 of the mirror assembly. The free surface 43 of said base 42 can be used, if necessary, to attach elements of the actuation mechanism, for example a magnet. In some actuation systems, the lower part 43 of the mirror assembly base 42 remains as a free surface, for example in the case of electrostatic actuation. The realized height and widths of the supporting frame 40 and of the remaining silicon substrate part 42 are advantageously chosen in function of the specific assembly requirements of the MOEMS device.

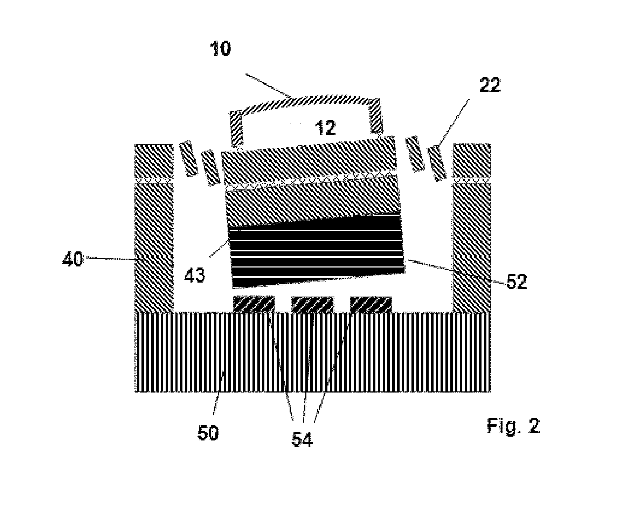

The fourth main component of the MOEMS device is the actuator system. In a first preferred realization of the actuator 54 at least one magnet 52 is fixed to the free surface 43 of the base 42 of the mirror assembly, as shown in Fig.1b. On the platform 50, which is firmly attached to said supporting frame 40 of the MOEMS device, the actuator 54 is realized by an array of electrical coils. By applying electrical current to one or several of said coils, an attractive force will be induced between said coils and said magnet. An electrical signal system controls the electrical current in the coils and by the asymmetry of the exercised forces on the magnet 52, a torque force will be imposed, through the mirror assembly, on the flexible suspension structure 22 and the suspended mirror assembly will be oriented by an angle depending on the mechanical properties of the suspension structure. Fig.2 illustrates a MOEMS in its actuated position, and illustrates the inclined mirror assembly. Preferably the suspension structure 22 of the mirror is composed of four torsional beams, whose torsion, imposed by the actuation forces, allows to orient the mirror assembly according to two rotation axes defined by the suspension beams, as illustrated in Fig.1c.

In another preferred actuation mechanism of the MOEMS, as illustrated in Fig.1a, the actuation layer 54 is composed of an array of electrodes organized and deposited on said actuation platform 50 which is attached firmly to the supporting frame 40 of the MOEMS device. By applying electrical voltages between elements of the electrode array 54 and the base of the mirror assembly 42, electrostatic forces are induced between the actuation layer 54 and the surface 43 of the base 42 of the mirror assembly. These electrostatic forces impose torsional forces to the flexible beams to which the mirror assembly is attached, resulting in the change of orientation of the mirror assembly.

In all the subsequently described embodiments of the MOEMS device, it is understood that both described actuation and steering mechanisms may be applied, i.e. preferably an electrostatic actuation mechanism or more preferably a magnetic actuation mechanism. Other steering actuators 54 may also be provided to all described embodiments of the invention, such as for example thermo mechanic or piezoelectric actuators organized advantageously on the platform 50.

In a second preferred embodiment of the invention, a design is provided that allows to modify the shape of the mirror 10 by changing the gas pressure in the cavity 12 of the mirror assembly.

In this second preferred embodiment, in order to allow to introduce gas under pressure in the cavity 12, the suspension beams are micro structured so that, at least two of them, contain an internal channel 66 along their length, said channels allowing to conduct a gas.

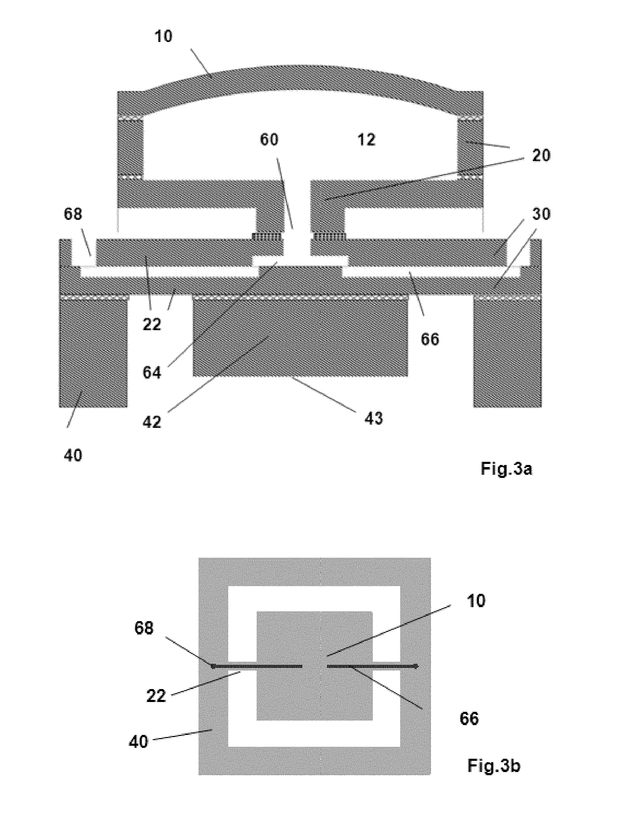

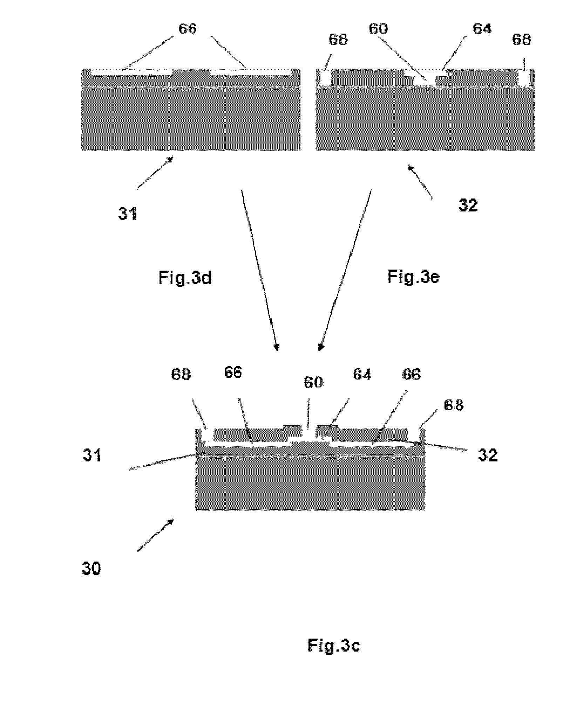

At the extremities of the internal channels of at least one suspension beam, as illustrated in Fig. 3, gas inlets 68 are provided. The gas inlets 68 allow to introduce gas, coming from an external gas supply, into the conducting channels of said suspension beams 22. As shown in Fig.3 the internal channels in the suspension beams, intended to conduct gas, are connected, through at least one intermediate gas conducting channel 64, to an aperture 60 that is provided in the support substrate of the mirror assembly. This intermediate gas conducting channel 64, allowing gas to pass from channels 66 to the aperture 60, is realized, as will be explained further in more detail, by appropriate structuring of two layers 30 and 31 forming the third substrate.

In order to realize this type of preferred assembly that allows to conduct gas through the suspension beams, three substrates are used:
- the first substrate comprising the membrane 10 that constitutes the mirror,
- the second substrate 20 to support the mirror,
- the third substrate 30, similar to the one described in the first embodiment, comprises suspension beams that contain internal channels 66, intended to conduct gas.

The first membrane substrate 10 comprises the silicon mirror membrane.

The second substrate 20 constitutes the structured supporting substrate of the mirror, and contains an opening 60 positioned so that it will be aligned preferably with the center of the mirror assembly. After bonding of the membrane substrate 10 with the support substrate 20, the cavity 12 is formed and provided with a central aperture 60 in the support substrate 20 and connected with the cavity 12 of the mirror assembly.

The third substrate 30 is necessary to form the suspension beams with their internal channels 66. This third substrate 30 is realized by structuring and bonding two layers: a first layer 32 constitutes, after appropriate structuring, the upper part of the suspension beams and the second layer 31 constitutes, after appropriate structuring, the lower part of the suspension beams. The structuring of both layers is realized with advantageously chosen structuring steps, such that after their bonding, the suspension beams 22 with internal channels 66 are completely formed, as well as the needed intermediate connecting channels 64. The two layers 31, 32 composing said third substrate 30 are structurally designed, as illustrated in Fig.3c, 3d, 3e, such that the intermediate connecting channels 64 will be connected, after bonding of the support substrate 20 and the suspension beam substrate 30, to the central opening 60 of said second substrate. It is understood that a person skilled in the art of microtechnology processes can find another process flow leading to the realization of channels 64 and channels 66 in the suspension beams 22.

The gas conducting channels 66 present at their extremity at least one inlet 68, which allow to exchange gas with an external gas supply system. The connection with the external gas supply system, not shown in the Figures, is realized through advantageously chosen connectors that are fixed to inlets 68, and these connectors are linked by appropriate means to said external gas supply. Said external gas supply incorporates a gas regulation system with which gas can be forced, through inlets 68, into the conduct channels 66 inside the suspension beams. Gas that is introduced by inlets 68 and guided by said channels 66 through the suspension beams, is subsequently guided through the connecting channels 64 and introduced in the opening 60 of the support substrate of the mirror assembly. Through the opening 60 in the support base of the mirror assembly, said gas is introduced in said cavity 12 and its pressure will bend the mirror membrane 10. By adjusting and controlling the pressure of the gas, the shape of the mirror can be varied dynamically.

In this second preferred embodiment of the invention, actuation means, as previously described, are arranged between the supporting frame and the mirror assembly. Hence, the MOEMS device allows to steer and orient the mirror assembly and at the same time change the shape of its mirror. This combination of functions allows to change at the same time the direction of an incident light beam and its divergence. For example, a parallel optical beam can be deviated under a certain angle and at the same time the optical beam can be focused. Also, in another optical configuration, the beam is deviated to a predetermined direction, and the divergence of the incident beam at that fixed direction can be dynamically changed and controlled by the external gas pressure.

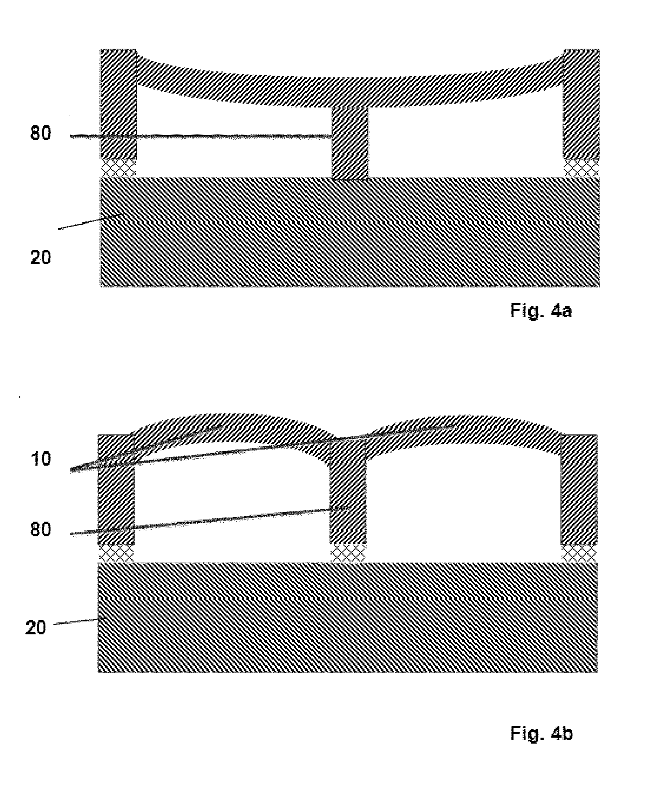

In another alternative design of the device, using the same type of technology steps as described in the first and second embodiments, and as illustrated in Fig4a, at least one central wall is provided in the supporting substrate 20 of the mirror assembly. Preferably, but not necessarily, the wall is positioned facing the center of the membrane 10. The central wall is mainly intended to act as a stopper and to avoid damage to the mirror by limiting its sag in case of very low pressure in the mirror cavity. The height, lateral dimension and width of the wall can have different values depending on the specific parameters of the micro assembly, such as membrane thickness or the applied pressure of said gas. It is also possible to provide the mirror assembly with several such walls, for example to impose a specific surface shape, preferably defined by a polynome. In another preferred design version a wall can be provided to realize a mirror assembly comprising two convex shaped mirror surfaces as shown in Fig.4b. Different well known technology steps can form said wall, for example by an etching step or deposition step or a combination of both.

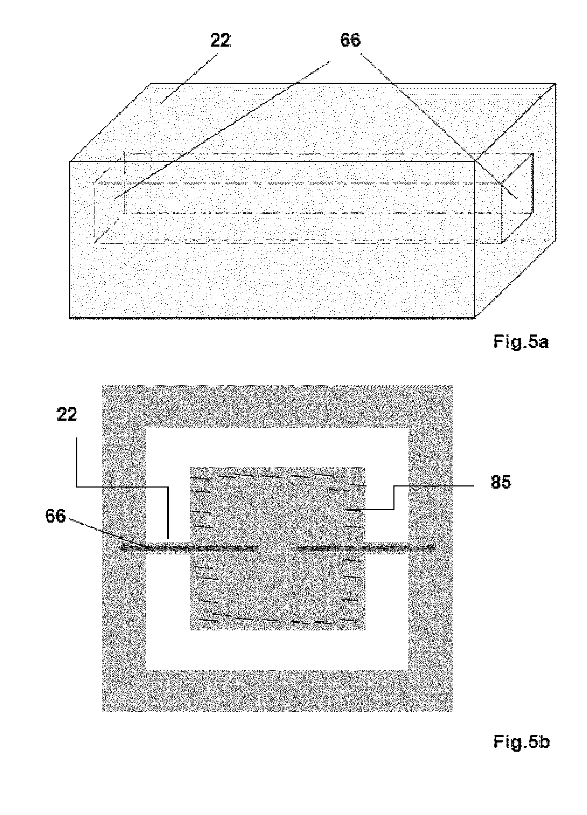

In another variant of design of the MOEMS device, as illustrated in Fig. 5a, the geometry of the suspension beams 22 is designed and provided with surface structures such as to improve heat exchange of the suspended mirror assembly with its environment. This design could be advantageous in the case of for example high power incident radiation. The environment may be a gas, preferably air. The environment may also be a fluid. In order to further improve heat exchange, as illustrated in Fig. 5b, surface micro structures 85 may be integrated on the external surface on the membrane substrate, at the periphery of the surface defining the mirror, so as to increase the surface of the suspension beams.

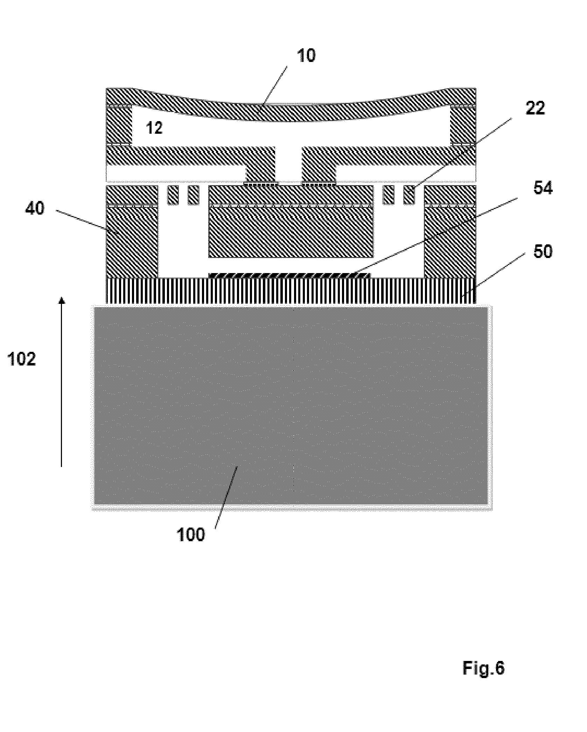

It should be understood that different types of realizations, modifications and improvements of the MOEMS device can be imagined in the spirit and scope of the invention. For example, the mirror could be designed, as illustrated in Fig. 6 so that its diameter is greater than the width of the MOEMS frame, allowing to assemble different MOEMS devices, as described by the invention, side by side in a 2 dimensional array, and obtain as such a total reflecting surface of the MOEMS array with a high fill factor of the reflecting surfaces. Also, optical improvements could require to mask a part of the mirror surface by depositing an annular shaped absorbing coating at its periphery, for example to enhance the optical F-number of the optical systems and as such reduce spherical aberration.

Any additional structural or geometrical changes that widen the application range of the described MOEMS are included in the present invention. For example, as illustrated in Fig. 6, the complete MOEMS, as described in the invention, could be fixed on a linear translator 100 allowing to move the MOEMS forward or backward in the direction 102 of the central axis of the system, which is the central axis if the mirror at rest.

## Claims

1. Micro-opto-electro-mechanical system (MOEMS) device, comprising:
- an assembly comprising a reflecting silicon membrane (10), curvature of which being determined by the pressure of a gas contained in a cavity (12) under said membrane, said cavity being formed by two bonded silicon substrates of which at least one is micro structured,
- a flexible suspension (22) to which said assembly is attached,
- a frame (40) on which the flexible suspension is fixed, and
- an actuation mechanism (54) connected to said assembly and able to constrain the flexible suspension (22), allowing the steering and orientation of said assembly in space.

2. Device according to claim 1, wherein the silicon membrane (10) has a metallic or dielectric reflection coating on its outer surface.

3. Device according to one of the preceding claims, wherein the actuation mechanism is electromagnetic.

4. Device according to claim 3, wherein the actuation mechanism is composed preferably of a fixed magnet (52) integrated to the substrate basis of the cavity, and at least an electrical coil (54) fixed to a platform (50) that is part of the supporting frame.

5. Device according one of the claims 1 and 2, wherein the actuation mechanism is electrostatic.

6. Device according to one of claims 1-5, wherein the curved membrane (10) has a fixed convex or concave shape induced and maintained by the pressure of a gas in the cavity (12) of said assembly, said cavity (12) being sealed.

7. Device according to claim 6, wherein the flexible suspension comprises beams (22) structured so as to improve heat exchange between the cavity (12) and its environment.

8. Device according to one of claims 1-5, wherein the curved membrane (10) has a tunable shape, said shape being tuned by means for changing the gas pressure in said assembly.

9. Device according to claim 8 wherein the flexible suspension (22) comprises hollow flexible beams connected to the cavity (12) and allowing gas to be introduced and maintained under pressure in said cavity.

10. Device according to claim 9, wherein the hollow flexible beams are connected to an external gas supply system comprising means to regulate the gas pressure, allowing as such to change and maintain the shape of the membrane (10), by the action of the gas pressure on said membrane.

11. Device according to one of the preceding claims, fixed on a linear translator (100) so as to move the supporting frame of the device forward and backward in the direction (102) of the optical axes of the membrane at rest.
